# EUROPÄISCHE PATENTSCHRIFT

(11) **EP 0 777 422 B1**
(45) Veröffentlichungstag und Bekanntmachung des Hinweises auf die Patenterteilung: **03.01.2001**
(21) Anmeldenummer: 95943521.5
(22) Anmeldetag: 12.07.1995
(51) Int. Cl.: A23L 1/0524, A23G 3/00, A23P 1/04, C13K 1/00

(54) **VERFAHREN ZUR HERSTELLUNG EINES GELIERHILFSMITTELS**
PROCESS FOR PRODUCING A GEL-FORMING SUBSTANCE
PROCEDE DE PRODUCTION D'AGENTS GELIFIANTS

(30) Priorität: 14.07.1994 DE 4424866
(43) Veröffentlichungstag der Anmeldung: 11.06.1997
(73) Patentinhaber: PFEIFER & LANGEN, 50885 Köln (DE)
(72) Erfinder: LUDOVICI, Karl, D-51469 Bergisch Gladbach (DE); HOFFMANN, Rolf-Dieter, D-50189 Elsdorf (DE); BONGERS, Ulrich, D-50169 Kerpen (DE)
(74) Vertreter: Werner, Hans-Karsten, Dr.Dipl.-Chem.
(86) Internationale Anmeldenummer: EP9502712
(87) Internationale Veröffentlichungsnummer: WO9602150

(56) Entgegenhaltungen:
- EP-A- 0 052 919
- EP-A- 0 136 460
- DE-A- 3 516 111
- FR-A- 2 669 511
- US-A- 4 002 771
- US-A- 4 686 106

## Beschreibung

Gegenstand der vorliegenden Erfindung ist ein Verfahren zur Herstellung eines Gelierhilfsmittels durch Überziehen von körnigen Zuckerteilchen mit feinvermahlenem Pektin sowie gewünschtenfalls mit einer oder mehreren Komponenten wie Citronensäure, Trikaliumcitrat und Kaliumsorbat.

Ein derartiges Verfahren ist bekannt aus der DE-PS 1 275 853, bei welchem die Zuckerteilchen mit Wasser angefeuchtet werden und hierauf ein Gemisch aus miteinander feinvermahlenem Zucker und Pektin auf eine Teilchengröße von 2 bis 50 µm aufgebracht wird. Dieses Verfahren hat sich zwar in der Praxis bewährt, ist jedoch bei der praktischen Durchführung relativ aufwendig, weil es in zwei getrennten unterschiedlichen Anlagen für die beiden Produktionsschritte durchgeführt werden muß. Man benötigt eine Vormischungsanlage mit einer Mehrkomponentenwaage mit Rezeptursteuerung, Mischschnecken, entmischungsfreie Abfüllung und intensive Entstaubung. In der zweiten Stufe benötigt man Dosierorgane für einen kontinuierlichen Prozeß, Mischschnecken und eine intensive Entstaubung. Weiterhin ist es nötig, für beide Schritte die sehr arbeitsintensive Zerreißgewichtsbestimmung durchzuführen, da die Rezeptur nur dann für den Markt geeignet ist, wenn die Grenzwerte für die Zerreißgewichte eingehalten werden.

Weiterhin führt die Zugabe von Wasser zur Bildung von Verklumpungen, die abgesiebt werden müssen und zu Problemen in den Mischern und in den Abfüllmaschinen durch Verbackungen führen können.

Der fertige Gelierzucker neigt zu Entmischungserscheinungen und Inhomogenitäten und damit zu ungleichmäßigen Produkteigenschaften. Die starke Staubbildung des Pektins führt in beiden Produktionsschritten zu Verlusten und mechanischen Problemen.

Auch in der fertigen Packung kann es zu Entmischungserscheinungen kommen, so daß empfohlen wird, stets ganze Packungen zu verwenden.

In der DE-PS 1 800 141 ist ein Verfahren beschrieben, bei welchem ein leicht wasserlösliches, rieselfähiges, hochkonzentriertes Trockenpektinprodukt hergestellt wird, welches durch Bedampfen zu einem schwammigen Produkt agglomeriert und dann getrocknet wird. Diese Agglomerate werden vorzugsweise so hergestellt, daß die Agglomerate eine ähnliche Korngrößenfraktion aufweisen, wie der hiermit zu vermischende Kristallzucker. Auch dieser Gelierzucker neigt zu Entmischungserscheinungen und erfüllt somit nicht alle Anforderungen an ein derartiges Produkt.

Die US-A-4,686,106 beschreibt ein trockenes Gemisch für Gelee- oder Marmeladezubereitungen, welches außer groben sandigen Zuckerpartikeln 0,05 bis 0,15% eines Emulgators enthält aus der Gruppe der Mono- und Diglyceride und Triacetin sowie Mischungen derselben, welche auf mindestens einem Teil der Oberflächen der Zuckerteilchen verteilt sind und welche mit trockenem gemahlenem Pektin einer Partikelgröße von < 200 mesh beschichtet sind. In Spalte 2, Zeilen 20 ff. wird darauf hingewiesen, daß die Verwendung eines Emulgators unbedingt erforderlich ist und daß ohne einen solchen Emulgator der Zucker Klumpen bildet, wenn er mit dem Fruchtsaft oder einer vergleichbaren Flüssigkeit vermischt wird.

Die EP-A-0 136 460 beschreibt ein umgekehrtes Verfahren, bei welchem Komponenten wie Citronensäure und Pektin mit Fetten umhüllt werden, die bei Raumtemperatur fest sind. Dieses Material kann dann bei Zimmertemperatur nach dem Abkühlen auch mit Zucker vermischt werden.

Die Erfindung hat sich die Aufgabe gestellt, ein einfaches, preiswertes und zuverlässiges Verfahren zu entwikkeln, welches zu einem Produkt führt, das qualitativ mindestens den Handelsprodukten gemäß der oben genannten Patentschriften entspricht, jedoch nicht zu Entmischungserscheinungen neigt.

Diese Aufgabe konnte jetzt überraschend einfach dadurch gelöst werden, daß zunächst der Zucker gewünschtenfalls zusammen mit den kristallinen, gröberkörnigen Komponenten wie der Citronensäure, Trikaliumcitrat und Kaliumsorbat mit 0,05 bis 0,5 Gew.-%, vorzugsweise 0,1 bis 0,2 Gew.-% eines neutralen Pflanzenöles und danach mit dem Pektin sowie gewünschtenfalls den weiteren feinteiligen Komponenten vermischt wird.

Das Ergebnis war nicht vorherzusehen, da der Fachmann zunächst befürchten mußte, daß bei Zusatz von Ölen Trübungen und/oder aufschwimmende Öltröpfchen entstehen, die weder qualitativ noch optisch vom Verbraucher akzeptiert würden. Es hat sich jedoch gezeigt, daß insbesondere im bevorzugten Mengenbereich zwischen 0,1 und 0,2 Gew.-% derartige Erscheinungen nicht auftreten. Eine Dosierung von nur 0,05 Gew.-% reicht bei grobem kristallinem Zucker aus, das Pektin und die anderen feinteiligen Komponenten ausreichend an der Oberfläche der Zuckerkristalle und anderen kristallinen, gröberkörnigen Komponenten zu verkleben.

Entscheidend ist jedoch, daß das Öl weder den Zucker noch das Pektin noch die sonstigen Komponenten zu lösen vermag, so daß es zu keinen unerwünschten Verklebungen oder Verklumpungen kommt. Dennoch wird die Staubbildung des Pektins ausreichend unterdrückt. Die aufwendige Bestimmung des Zerreißgewichtes muß beim erfindungsgemäßen Verfahren nur einmal durchgeführt werden. Das Verfahren läßt sich in einer Mischvorrichtung in zwei Arbeitsschritten durchführen. Es sind sogar die technisch sehr einfachen Freifallmischer geeignet. Die Mischzeiten sind deutlich kürzer, was zu einer hohen Raum-Zeit-Ausbeute bei niedrigen Investitionen führt. Ein wesentlicher Vorteil des erfindungsgemäßen Verfahrens besteht darin, daß der Verfahrensschritt der Vormischung entfällt.

Der erfindungsgemäß entstehende Gelierzucker ist absolut entmischungsstabil. Dies hat zur Folge, daß auch angebrochene Packungen eingesetzt werden können, während früher empfohlen werden mußte nur ganze Packungen zu verwenden. Da es zu keinen Verklebungen oder Verklumpungen mehr kommt, könnte sogar auf die Absiebung verzichtet werden. Eine Absiebung würde beim erfindungsgemäßen Verfahren nur noch einer vorsorglichen Sicherheitsmaßnahme entsprechen. Die Verluste an Pektinstaub sind deutlich geringer. Verluste und Verunreinigungen in der Anlage werden stark reduziert.

Schließlich wurde beobachtet, daß das neue Geliermittel entschäumend wirkt, so daß der Anwender weniger Probleme mit der Schaumbildung beim Kochen hat. Außerdem entstehen bei der Herstellung von Gelees klarere Produkte.

## Patentansprüche

1. Verfahren zur Herstellung eines Gelierhilfsmittels durch Überziehen von körnigen Zuckerteilchen mit feinvermahlenem Pektin, dadurch gekennzeichnet, daß zunächst der Zucker mit 0,05 bis 0,5 Gew.-% eines neutralen Pflanzenöles und danach mit dem Pektin vermischt wird.

2. Verfahren gemäß Anspruch 1, dadurch gekennzeichnet, daß das Gelierhilfsmittel zusätzlich kristalline, pulverkörnige Komponenten wie Citronensäure, Trikaliumcitrat und Kaliumsorbat enthält und diese zusammen mit den körnigen Zuckerteilchen mit dem Öl vermischt werden.

3. Verfahren gemäß Anspruch 1 oder 2, dadurch gekennzeichnet, daß die Ölmenge 0,1 bis 0,2 Gew.-% beträgt.

## Claims

1. A process for the preparation of a jellying agent by coating granular sugar particles with finely ground pectin, characterized in that the sugar is mixed first with from 0.05 to 0.5% by weight of a neutral vegetable oil and thereafter with the pectin.

2. The process according to claim 1, characterized in that said jellying agent additionally contains crystalline powder-granular components, such as citric acid, tripotassium citrate and potassium sorbate, which are mixed with said oil together with said granular sugar particles.

3. The process according to claim 1 or 2, characterized in that the amount of said oil is from 0.1 to 0.2% by weight.

## Revendications

1. Procédé de fabrication d'un agent de gélification par revêtement de grains de sucre par de la pectine finement broyée, caractérisé en ce que le sucre est d'abord mélangé avec 0,05 à 0,5 % en poids d'huile végétale neutre puis à la pectine.

2. Procédé selon revendication 1, caractérisé en ce que l'agent de gélification contient en plus des composants cristallins sous forme de granules, tels l'acide citrique, le tricitrate de potassium et le sorbate de potassium, et en ce que ces derniers sont mélangés à l'huile avec les grains de sucre.

3. Procédé selon revendication 1 ou 2, caractérisé en ce que la quantité d'huile est comprise entre 0,1 et 0,2 % en poids.
